# EUROPEAN PATENT SPECIFICATION

(11) **EP 2 653 239 B1**
(45) Date of publication and mention of the grant of the patent: **12.08.2015**
(21) Application number: 13164352.0
(22) Date of filing: 18.04.2013
(51) Int. Cl.: B08B 9/42, B65G 47/84

(54) **A gripper for retaining bottles**
Greifer zum Halten von Flaschen
Pince pour tenir des bouteilles

(30) Priority: 18.04.2012 IT PD20120119
(43) Date of publication of application: 23.10.2013
(73) Proprietor: Gruppo Bertolaso S.p.A., 37040 Zimella (VR) (IT)
(72) Inventor: Mazzon, Giovanni, I-37047 Lobia di San Bonifacio (VR) (IT); Elampini, Alviano, I-37138 Verona (IT); Rambaldi, Enrico, I-37036 S. Martino Buon Albergo (VR) (IT); Gianello, Pietro, I-37038 Soave (VR) (IT)
(74) Representative: Gallo, Luca

(56) References cited:
- EP-A1- 2 248 759
- DE-U1- 20 305 988

## Description

### Field of application

The present invention refers to a gripper for retaining bottles according to the preamble of the independent claim.

The present gripper is inserted in the field of industrial bottling plants and is intended to be advantageously employed on a machine with rotary turntable, such as in particular a rinsing machine, for retaining the bottles during their operative travel around the rotation shaft of the rotary turntable.

### State of the art

Rotary turntable machines are known in the industrial bottling plant field; such machines are employed in bottling lines in order to subject the bottles to a specific treatment (such as rinsing machines, filling machines, etc.), or to transport the bottles from a machine upstream to a machine downstream of the line.

In particular, rinsing machines of known type are conventionally provided with a fixed support frame on which a rotary turntable is rotatably mounted, which peripherally supports a plurality of grippers adapted to grasp the bottles to be rinsed and arrange them overturned above the corresponding nozzles, through which a sanitizing fluid is injected inside the bottles themselves.

More in detail, each gripper is conventionally provided with a pair of arms that can move between an open position, in which respective retention portions of the arms are spaced from each other in order to receive or release the bottle, and a closed position, in which the retention portions of the arms are moved close together in order to retain the bottle between them, at the bottle's neck.

Each gripper is also mounted on a corresponding tilting fork, which is rotatably constrained to the turntable, and is susceptible to rotate 180° around a horizontal rotation axis in order to overturn the bottle retained by the arms of the gripper and arrange the bottle itself overturned above the corresponding injection nozzle for the sanitizing fluid.

In the rinsing machines of known type, such as that described in the patent IT 1333259, the arms of the grippers for retaining the bottles are each provided with a grip pad of plastic material intended to cooperate with the pad of the other arm in order to retain the bottle by abutting against the external surface of the neck of the bottle itself.

More in detail, each pad is shaped with a semicircular recess at which the pad abuts against the neck of the bottle. Such recess is shaped with a diameter substantially equal to the diameter of the bottle neck, in a manner such to be adapted to follow the form of the external surface of the bottle neck as much as possible in order to facilitate the correct retention thereof.

The main drawback of the rinsing machine described in the patent IT 1333259 consists of the fact that the aforesaid grippers do not allow retaining the various bottle types in a sufficiently firm manner, and hence they require the substitution of the pads with others with greater height for maintaining the bottles sufficiently firm. This requires interrupting the functioning of the rinsing machine in order to manually substitute the pads of the arms of all the grippers, with consequent lengthy production dead times.

In addition, the retention systems of known type are not capable of firmly retaining large-size bottles with a single gripper, with the risk that they will fall from the gripper during the tilting thereof.

As stated above, rotary turntable machines are also known that are employed for transferring bottles between the different machines of the bottling line; in the jargon of the field these are termed "star conveyors". The latter comprise a plurality of grippers, each provided with two pairs of superimposed arms, a lower and an upper arm, both susceptible to grasp the bottle at the enlarged body of the latter.

A gripper in accordance whit the preamble of claim 1 is described in the German utility model DE 20305988; such document regards a gripper provided with a support body to which the arms of each pair of arms are pivoted by means of corresponding pins.

The arms of the gripper are rotated between the corresponding open and closed positions by a control rod, which is arranged between the retention portions of the arms of each pair and acts with a shaped profile thereof on discs mounted on the arms themselves.

Each arm is provided with a rear portion which is extended from the side opposite the retention portion with respect to the corresponding pin, and is much shorter than the retention portion itself.

Each pair of arms of the gripper is provided with two return springs, each of which mounted to connect the rear portions of the corresponding arms in order to return the latter into the closed position.

The main drawback of the grippers of known type described in the utility model DE 20305988 consists of the fact that they are not adapted to firmly retain the bottles, since the length of the rear portions of the arms (on which the return springs act) is much smaller than that of the retention portions and therefore the force exerted by the latter on the bottle is much less than that exerted by the springs on the lower portions of the arms.

In particular, the grippers described in the utility model DE 20305988 are only arranged for grasping the enlarged body of the bottles with a force sufficient for horizontally driving them around the axis of the rotary turntable, but not sufficient for allowing the gripper to retain the bottle during the tilting of the latter, as occurs in the rinsing machines.

In addition, the grippers of the star conveyors of the above-described type are not at all employable in the rinsing machines, since they have excessive size and bulk that would not allow the installation thereof on the tilting fork of the rinsing machines themselves.

In addition, such grippers of known type are not adapted to firmly grasp bottles with non-cylindrical enlarged form (e.g. oval, square form, etc.) or provided with handle (such as flasks, etc.).

A further drawback of the gripper described in the utility model DE 20305988 is due to the fact that the control rod of the arms must be actuated both for opening and closing the arms themselves by suitable cams of the star conveyor, with consequent structural complications of the star conveyor itself.

Moreover, the arrangement of the control rod between the retention portions of the arms makes the gripper relatively bulky and structurally complex.

### Presentation of the invention

In this situation, the problem underlying the present invention is to overcome the drawbacks of the prior art, by providing a gripper for retaining bottles that is structurally simple and entirely reliable in operation.

Further object of the present invention is to provide a gripper for retaining bottles capable of firmly retaining the bottles, in particular those with different format and large size.

Further object of the present invention is to provide a gripper for retaining bottles which allows being employed in a versatile manner upon varying the format of the bottles without having to carry out arduous adjustments or substitutions of parts of the gripper itself.

Further object of the present invention is to provide a gripper for retaining bottles that is compact and at the same time structurally simple and inexpensive to manufacture.

Further object of the present invention is to provide a gripper for retaining bottles that allows retaining the bottles centred in the respective seats on the turntable upon varying the formats thereof.

Further object of the present invention is to provide a gripper for retaining bottles which allows executing a change of format of the bottles without interrupting the production line.

### Brief description of the drawings

The technical characteristics of the invention, according to the aforesaid objects, are clearly found in the contents of the below-reported claims and the advantages thereof are more evident in the following detailed description, made with reference to the enclosed drawings, which represent a merely exemplifying and non-limiting embodiment of the invention, in which:
- figure 1 shows a diameter section view of a machine provided with the grippers, object of the present invention, with several parts of the machine removed in order to better illustrate other parts thereof;
- figure 2 shows a side view of the gripper for retaining bottles, object of the present invention;
- figure 3 shows a top plan view of the gripper illustrated in figure 2;
- figure 4 shows a first section view of the gripper illustrated in figure 3, along the line IV - IV of figure 3 itself;
- figure 5 shows a second section view of the gripper illustrated in figure 3, along the line V - V of figure 3 itself;
- figure 6 shows a third section view of the gripper illustrated in figure 3, along the line VI - VI of figure 3 itself.

### Detailed description of a preferred embodiment

With reference to the set of drawings, an embodiment of the gripper for retaining bottles, object of the present invention, is indicated in its entirety with the reference number 1.

The present gripper 1 is in particular intended to be employed in a machine 100 with rotary turntable.

Below, a preferred embodiment of the present invention will be described in which the gripper 1 is arranged in a machine 100 relative to a rinsing machine; nevertheless, it is intended that the technical solutions that are the object of the present invention are advantageously applicable also to other types of machines, such as star conveyors, blowing machines, filling machines, etc.

The machine 100 is conventionally inserted inside a bottling plant upstream of a filling machine, in order to subj ect the bottles 2 to a rinsing treatment for ensuring a suitable sanitizing of the bottles 2 that will be filled in the filling machine downstream. The bottles 2 are transferred from one machine to the other by means of conveyor lines, such as conveyor belts, star conveyors, screws, etc.

More in detail, the present machine 100 is provided with an inlet station, at which it receives (by means of a first star conveyor) the bottles 2 to be rinsed that are brought by a first conveyor belt upstream, and an outlet station, at which it releases (by means of a second star conveyor) the rinsed bottles 2 to a second conveyor belt downstream, adapted to convey such rinsed bottles 2 to the filling machine downstream.

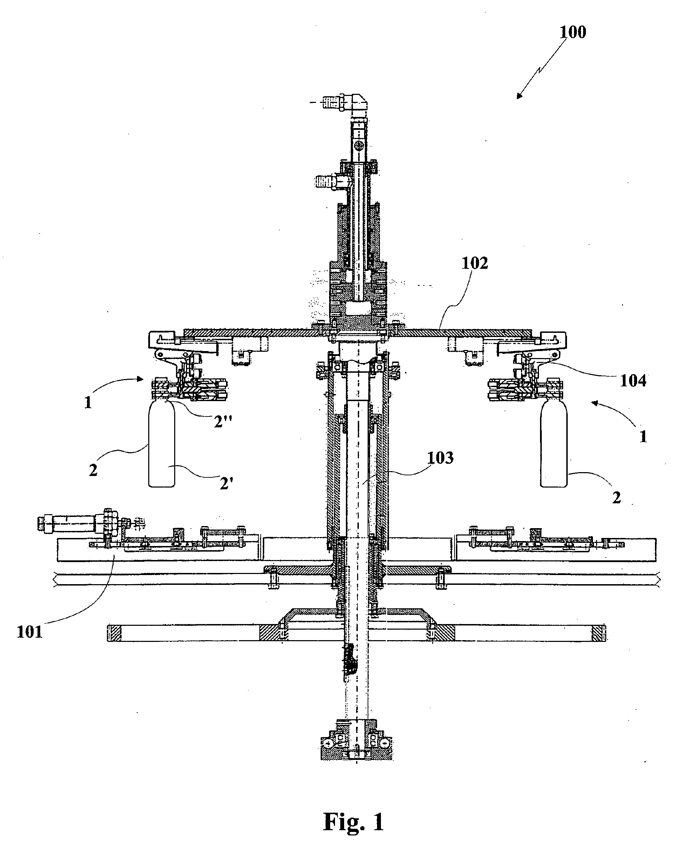

The bottles 2 are provided in a *per se* known manner with an enlarged body 2' terminating on the lower part with a support base, and from which a neck 2" is extended on the upper part, made narrow and provided at an upper end thereof with a mouth 2"' for the passage of an alimentary liquid contained in the bottle 2 itself. With reference to the embodiment illustrated in figure 1, the machine 100 comprises a support frame 101, set on the ground, on which a rotary turntable 102 is rotatable mounted, adapted to rotate around its vertical central rotation shaft 103.

The machine 100 further comprises a plurality of the aforesaid grippers 1, object of the present invention, arranged peripherally on the rotary turntable 102.

Advantageously, each of such grippers 1 is provided with a corresponding tilting fork 104, which is rotatably constrained to the rotary turntable 102 and is susceptible to rotate around a horizontal tilting axis X thereof, for tilting the bottle 2 retained by the gripper 1 itself.

More in detail, with reference to the embodiment illustrated in the enclosed figures, each tilting fork 104 is hinged to a connection bracket 105 fixed to the rotary turntable 102. The tilting fork 104 can be actuated to rotate 180° around its tilting axis X by a tubular cam arranged fixed around the rotation shaft 103 of the rotary turntable 102, in order to move the bottle 2 retained by the corresponding gripper 1 between an erect position, in which the bottle 2 is susceptible to being grasped or released by the gripper 1 (respectively at the inlet station and the outlet station of the machine 100), and an overturned position, in which the bottle 2 is retained by the gripper 1 with the mouth 2"' aligned with the supply opening of a corresponding nozzle 106 of the machine 100. In particular, each nozzle 106 of the machine 100 is connected, by means of a corresponding connector tube 107, to a sanitizing fluid feed circuit, and it is susceptible to inject such sanitizing fluid into the bottle 2 retained by the gripper 1 in overturned position in order to wash the internal surface of the bottle 2 itself.

According to the invention, the gripper 1 comprises a support body 3 intended to be mounted on the rotary turntable 102 of the machine 100, and a first pair 4 of first arms 5, which are pivoted on the support body 3, by means of respective first pins 6 having corresponding first rotation axes Y' parallel to each other, and are provided with respective first retention portions 5' intended to grip the neck 2" of the bottle 2 to be grasped, and with respective first actuation portions 5" arranged on the side opposite the first retention portions 5' with respect to respective first pins 6.

In addition, the gripper 1 comprises a second pair 7 of second arms 8, which are pivoted on the support body 3, by means of second pins 9 having corresponding second rotation axes Y" parallel to the first rotation axes Y' of the first pins 6 of the first arms 5, and are provided with respective second retention portions 8' intended to grip the neck 2" of the bottle 2, and with second actuation portions 8" arranged on the side opposite the second retention portions 8' with respect to the respective second pins 9.

More in detail, the first pair 4 of first arms 5 and the second pair 7 of second arms 8 can be actuated to rotate on the support body 3 on parallel rotation planes α', α" preferably arranged orthogonal to the rotation axes Y', Y" of the pins 6, 9. The first and the second pair 4, 7 of arms are arranged spaced from each other along a direction orthogonal to the aforesaid rotation planes α', α", and are preferably positioned separated from each other by a specific distance less than the length of the neck of the bottle formats commonly found on the market.

In this manner, advantageously, the first pair 4 of first arms 5 and the second pair 7 of second arms 8 are susceptible to retain the neck 2" of the bottle 2, at two sections of the neck 2" that are spaced from each other. Consequently, the moment exerted by the weight of the bottle 2 on the neck 2" of the latter during tilting is exerted in a distributed manner on the retention portions 5', 8' of the two pairs 4, 7 of arms and hence in an improved manner with respect to the currently known grippers which provide a single pair of arms.

Preferably, with reference to the embodiment illustrated in the enclosed figures, the two arms of each pair 4, 7 of arms 5, 8 are positioned symmetrically with respect to a median plane β of the gripper 1, which is arranged vertically and is orthogonal to the aforesaid rotation planes α', α" of the arms 5, 8 themselves.

Advantageously, the support body 3 of the gripper 1 is interposed between the first pair 4 of first arms 5 and the second pair 7 of second arms 8 along the aforesaid direction orthogonal to the rotation planes α', α". More in detail, in accordance with the embodiment illustrated in the enclosed figures, the support body 3 is provided with a first face 10 on which the first arms 5 are pivoted, and with a second face 11 turned in the direction opposite the first 10 and on which the second arms 8 are pivoted.

In addition, in particular, the support body 3 is provided with a front face 12, turned towards the retention portions 5', 8' of the arms 5, 8, and with a rear face 13, turned in the direction opposite the front face 12 and preferably parallel to the latter. Advantageously, the support body 3 of each gripper 1 is rigidly fixed to the corresponding tilting fork 104, with the first face 10 thereof (on which the first arms 5 are pivoted) turned towards the tilting fork 104 itself.

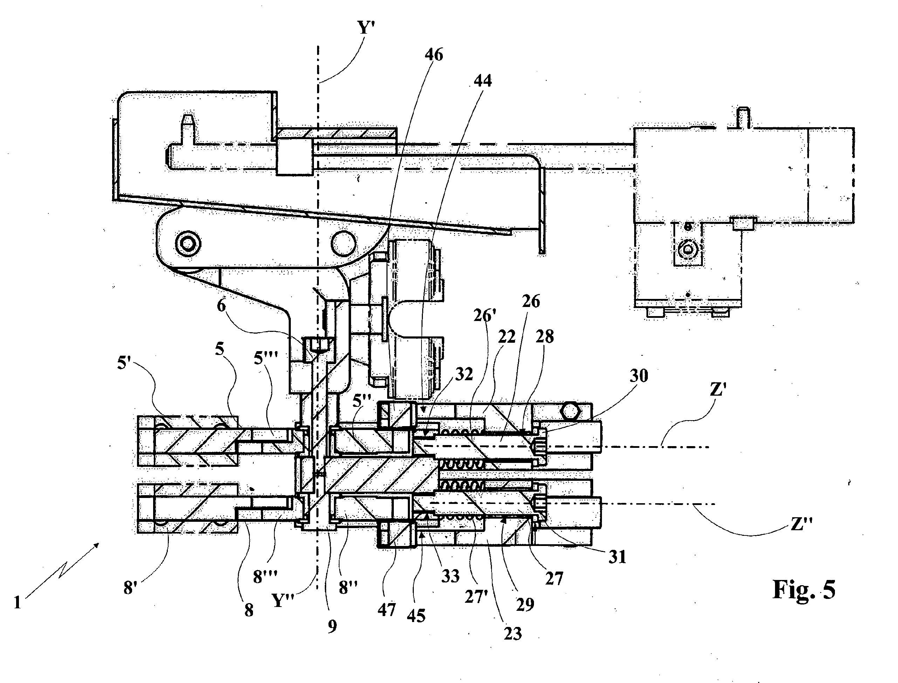

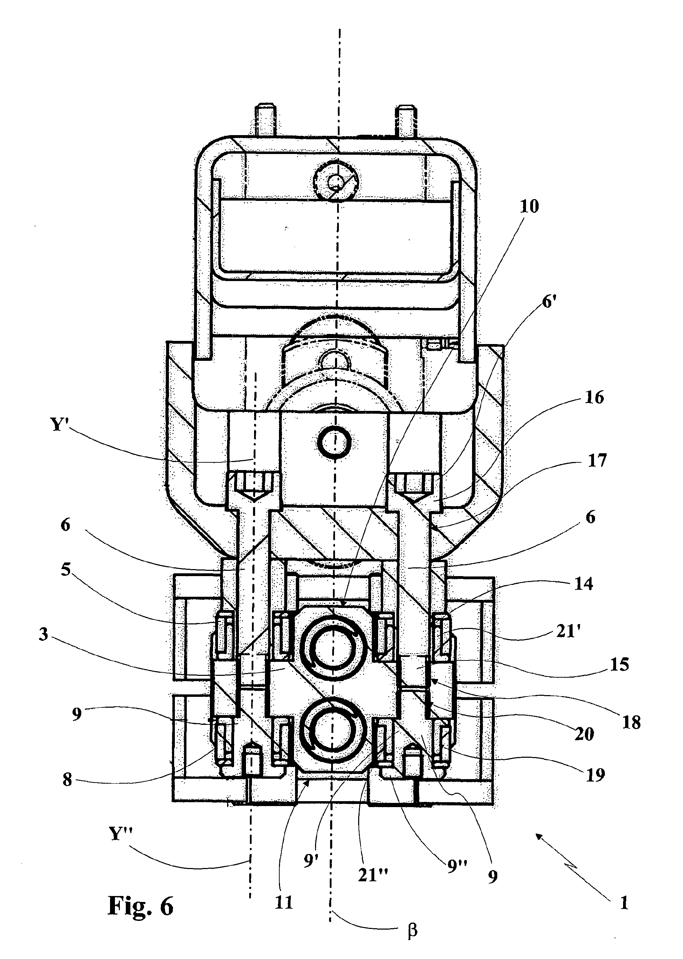

Advantageously, with reference to the embodiment illustrated in figures 5 and 6, the support body 3 of the gripper 1 is rigidly connected to the corresponding tilting fork 104 by means of the first pins 6 of the first arms 5. For such purpose, each of such first pins 6 is inserted in a manner such that it passes through a corresponding first pivoting hole 14 of the respective first arm 5, and is fixed, at a first terminal part 15 thereof, to the support body 3, and at an opposite second terminal part 16 thereof, to the tilting fork 104.

In accordance with the embodiment illustrated in the enclosed figures, each first pin 6 is advantageously obtained with a first fixing screw 6', which is inserted in a first through hole 17 obtained on the tilting fork 104 and aligned with the corresponding first pivoting hole 14 of the first arm 5, and is screwed in a corresponding first threaded hole 18 obtained on the first face 10 of the support body 3 and aligned with the aforesaid first through hole 17 and first pivoting hole 14.

Preferably, the second pins 9 of the second arms 8 (pivoted on the second face 11 of the support body 3) are obtained by means of second fixing screws 9', each of which is inserted in a corresponding second pivoting hole 19 of the second arm 8, is screwed on a second threaded hole 20 obtained on the second face 11 of the support body 3, and abuts with its head 9" against the second arm 8 in order to retain it pivoted on the second face 11 itself.

In accordance with the embodiment illustrated in figures 5 and 6, each arm 5, 8 is provided inside the pivoting hole 14, 19 thereof with a rotation bushing 21', 21" arranged around the corresponding pin 6, 9 in order to allow the rotation of the arm 5, 8 around the latter with low friction.

According to the invention, the gripper 1 comprises transmission means 50, 51 engaged with the first arms 5 and with the second arms 8. Such transmission means 50, 51 are adapted to move the first arms 5 between a first open position, in which the first retention portions 5' of the first arms 5 are spaced from each other to receive or release the bottle 2, and a first closed position, in which the first retention portions 5' of the first arms 5 are brought close together, retaining the neck 2" of the bottle 2 itself gripped. The transmission means 50, 51 are also adapted to move the second arms 8 between a second open position, in which the second retention portions 8' of the second arms 8 are spaced from each other to receive or release the bottle 2, and a second closed position, in which the second retention portions 8' of the second arms 8 are brought close together, retaining the neck 2" of the bottle 2 gripped.

The gripper 1 is also provided with actuation means 24, 25 acting on the transmission means 50, 51 for actuating them respectively to move the first arms 5 between the first closed position thereof and the first open position thereof, and to move the second arms 8 between the second closed position thereof and the second open position thereof.

The aforesaid transmission means 50, 51 comprise first transmission means 50 engaged with the first arms 5, and second transmission means 51 engaged with the second arms 8.

In addition, advantageously, the actuation means 24, 25 comprise first actuation means 24 acting on the first transmission means 50 in order to actuate the opening and closing of the first arms 5, and second actuation means 25 acting on the second transmission means 51 for actuating the opening and closing of the second arms 8. In accordance with the idea underlying the present invention, the first transmission means 50 comprise a first slider 22 slidably mounted on the support body 3, engaged with the first actuation portions 5" of the first arms 5 of the gripper 1 and actuatable by the first actuation means 24 to move the first arms 5 between the first open position thereof and the first closed position thereof. In addition, the second transmission means 51 comprise a second slider 23 slidably mounted on the support body 3, engaged with the second actuation portions 8" of the second arms 8 of the gripper 1 and actuatable by the second actuation means 25 to move the second arms 8 between the second open position thereof and the second closed position thereof. Advantageously, in accordance with the embodiment illustrated in the enclosed figures, the first slider 22 and the second slider 23 can be respectively actuated by the first and the second actuation means 24 and 25, to be moved between a respective first operative position, in which they respectively bear the first arms 5 in the first closed position thereof and the second arms 8 in the second closed position thereof, and a respective second operative position, in which they respectively bear the first arms 5 in the first open position thereof and the second arms 8 in the second open position thereof.

Preferably, each slider 22, 23 can be actuated to be moved between the two operative positions thereof by sliding on the support body 3 along a corresponding sliding direction Z', Z" parallel to the median plane β of the gripper 1 and to the rotation planes α', α" of the arms 5, 8.

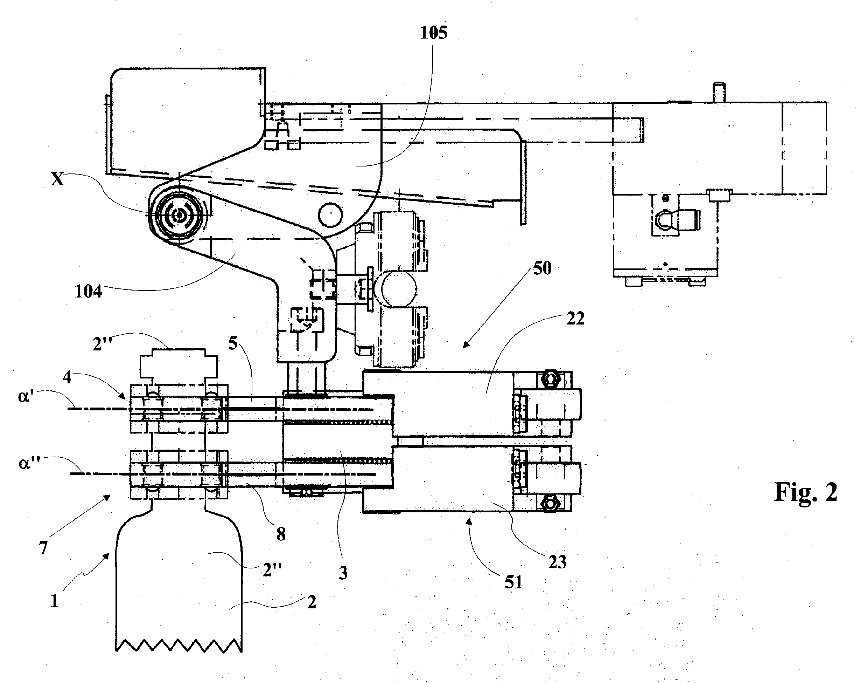

In accordance with the embodiment illustrated in the enclosed figures 2 - 5, each slider 22, 23 can be actuated to be moved away from the corresponding arms 5, 8 at the first operative position thereof (in which it bears the corresponding arms 5, 8 in the closed position), and can be actuated to be moved closer to the corresponding arms 5, 8 at the second operative position thereof (in which it bears the corresponding arms 5, 8 in the open position).

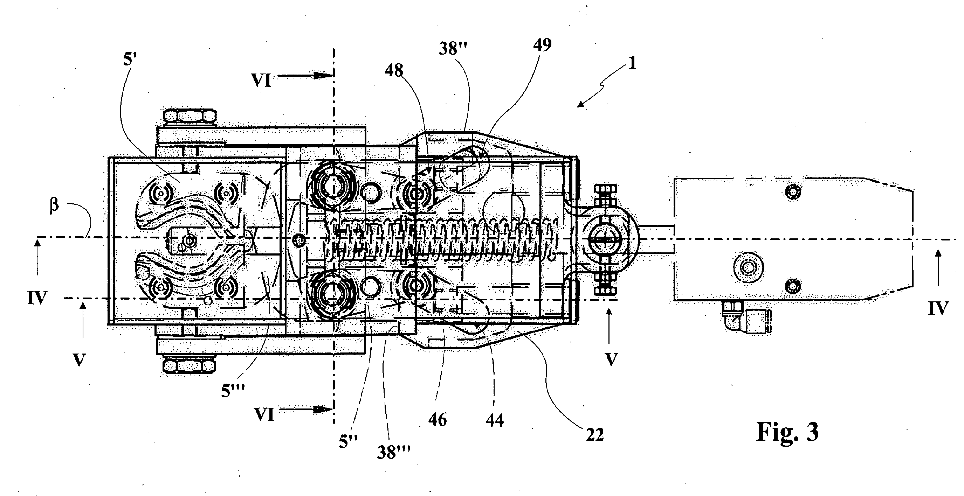

Advantageously, with reference to the embodiment illustrated in figures 3 and 5, the first and the second slider 22, 23 of the gripper 1 are slidably constrained to the support body 3 by means of at least one corresponding first and second guide rod 26, 27 fixed to the support body 3 and being extended parallel to the sliding directions Z', Z" of sliders 22, 23. More in detail, each first and second guide rod 26, 27 is inserted in a corresponding first and second guide hole 28, 29 respectively obtained in the first and in the second slider 22, 23, and is rigidly fixed on the rear face 13 of the support body 3.

In addition, the first and the second guide rod 26, 27 are respectively provided with a first and second end stop portion 30, 31 susceptible to respectively receive the first and the second slider 22, 23 in abutment, which are brought into the first operative position by the first and second actuation means 24, 25, respectively.

Still with reference to the embodiment illustrated in figures 3 and 5, a pair of first guide rods 26 is provided for guiding the first slider 22 and a pair of second guide rods 27 is provided for guiding the second slider 23, with the rods of each pair positioned on opposite sides with respect to the median plane β of the gripper 1. Preferably, the guide rods 26, 27 are obtained with corresponding guide screws 26', 27', which are inserted with the shank thereof in the corresponding guide holes 28, 29 of the corresponding slider 22, 23, are screwed in corresponding third and fourth threaded holes 32, 33 obtained on the rear face 13 of the support body 3, and define with the head thereof the end stop portion 30, 31 of the corresponding guide rod 26, 27.

Advantageously, the first actuation means 24 comprise a first spring 34 compressed between the support body 3 and the first slider 22 and adapted to return the latter towards the respective first operative position in order to close the first arms 5 of the gripper 1. The second actuation means 25 comprise a second spring 35 compressed between the support body 3 and the second slider 23 and adapted to return the latter towards the respective first operative position for closing the second arms 8 of the gripper 1.

Advantageously, the first and the second spring 34, 35 are extended along respective extension directions which are positioned parallel to the aforesaid median plane β of the gripper 1 and to the aforesaid rotation planes α', α" of the arms 5, 8, and are in particular arranged radially with respect to the rotation shaft 103 of the rotary turntable 102 of the machine 100.

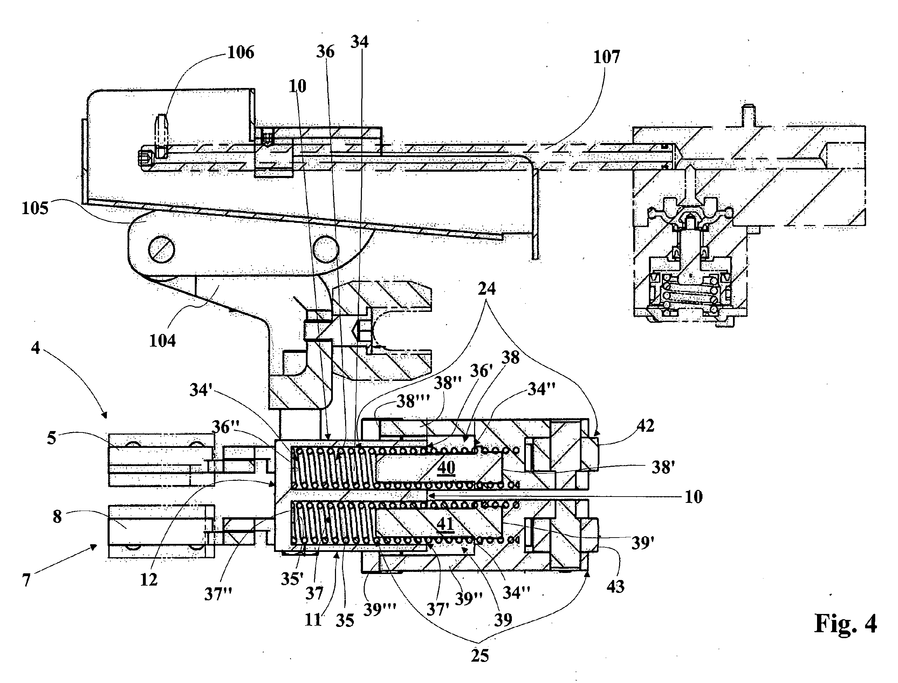

With reference to the embodiment illustrated in figure 4, the springs 34, 35, preferably of helical type, are arranged parallel to the sliding direction Z', Z" of the corresponding slider 22, 23 and each is advantageously provided with a first end part 34', 35' abutting against the support body 3, and with a second end part 34", 35" abutting against the corresponding slider 22, 23.

Preferably, the support body 3 of the gripper 1 is provided with a first and a second seat 36, 37, in which the first and the second spring 34 and 35 are respectively partially housed, respectively acting on the first and on the second slider 22 and 23. In particular, such first and second seat 36, 37 of the support body 3 are mainly extended along the sliding directions Z', Z" of sliders 22, 23, and are preferably arranged centrally with respect to the support body 3 at the median plane β of the gripper 1.

Each first and second seat 36, 37 is respectively provided with a first and a second opening 36', 37' obtained on the rear face 13 of the support body 3 in order to allow the entrance of each spring 34, 35 in the corresponding seat 36, 37, and it is respectively provided with a first and a second bottom wall 36", 37" against which the first end part 34', 35' respectively of the first and the second spring 34, 35 abut. Advantageously, with reference to the embodiment illustrated in figure 4, the first and the second slider 22, 23 are respectively provided with a first and a second hollow portion 38, 39, preferably shaped as a step, and intended to respectively house the portion of the first and the second spring 34, 35 that exits outward respectively from the first and second seat 36, 37 of the support body 3.

More in detail, the first and the second hollow portion 38, 39 are respectively provided with a first and a second base wall 38', 39' facing the rear face 13 of the support body 3 and against which the second end part 34", 35" respectively of the first and the second spring 34, 35 acts in order to respectively push the first and the second slider 22, 23 away from the arms 5, 8 of the gripper 1 towards the first operative position (in which the sliders 22, 23 bring the corresponding arms 5, 8 into closed position).

Moreover, preferably, the first and the second hollow portion 38, 39 are respectively provided with a first and a second lateral wall 38", 39", which are projectingly extended respectively from the first and from the second base wall 38', 39' respectively being arranged across from the first and the second face 10, 11 of the support body 3.

Preferably, the first slider 22 and the second slider 23 are respectively provided with a first and a second guide pin 40, 41 being orthogonally extended respectively from the first base wall 38'of the first hollow portion 38 and from the second base wall 39' of the second hollow portion 39, and coaxially inserted respectively in the first and in the second spring 34, 35 of spiral type.

Advantageously, the first and the second actuation means 24, 25 respectively comprise a first and a second cam follower 42, 43, respectively mounted on the first and on the second slider 22, 23, and susceptible to being slidably engaged with a fixed cam (not shown) of the machine 100 in order to respectively move the first and the second slider 22, 23 into the second operative position, overcoming the force respectively exerted by the first and the second spring 34, 35, with the aim of bringing the first and the second arms 5, 8 respectively into the first and second open position.

In accordance with the embodiment illustrated in the enclosed figures, the first and the second cam follower 42, 43 respectively comprise a first and a second small wheel rotatably constrained in an idle manner respectively to the first and to the second slider 22, 23 by the gripper 1.

Preferably, the fixed cam of the machine 100 is positioned at the inlet and outlet station of the machine 100 itself, and is adapted to act on the cam followers 42, 43 of sliders 22, 23 in order to push the latter into the second operative position thereof, in a manner such to control the opening of the arms 5, 8 of the gripper 1 for receiving a bottle 2 coming from the first conveyor belt, at the inlet station, and for releasing the bottle 2 to the second conveyor belt, at the outlet station.

Preferably, with reference to the embodiment illustrated in figures 3 and 5, each arm 5, 8 is substantially S-shaped, with the corresponding retention portion 5', 8' and the corresponding actuation portion 5", 8" arranged on opposite sides with respect to the median plane β of the gripper 1 and connected to each other by a corresponding transverse connection portion 5"', 8"', at which the arm 5, 8 is superimposed on the other arm of the same pair 4, 7.

According to the invention, the first and the second slider 22, 23 are respectively provided with two first and two second guide tracks 44, 45, to which the first and the second actuation portions 5", 8" are respectively slidably engaged, such portions respectively of the first and the second arms 5, 8.

Preferably, each first and second actuation portion 5", 8" respectively carry mounted a first and a second sliding block 46, 47 which are slidably inserted respectively in the corresponding first and second guide track 44, 45.

In particular, each sliding block 46, 47 comprises a pawl, preferably made of plastic material, rotatably constrained in an idle manner to the actuation portion 5", 8" of the corresponding arm 5, 8 of the gripper 1.

With reference to the embodiment illustrated in figure 3, the two first guide tracks 44 of the first slider 22 (and analogously the two second guide tracks 45 of the second slider 23) are arranged on opposite sides with respect to the median plane β of the gripper 1, and are preferably extended in a symmetric manner with respect to such median plane β.

Advantageously, the two first guide tracks 44 of the first slider 22 (and analogously the two second guide tracks 45 of the second slider 23) are extended, moving away from each other, from a first guide section 48 thereof, close to the corresponding arm, to a second guide section 49 thereof, spaced from the corresponding arm. The first and the second guide tracks 44, 45 are advantageously arranged inclined with respect to the sliding directions Z', Z" of the respective sliders 22, 23, and due to the movement of the latter, act on the actuation portions 5", 8" respectively of the first and second arms 5, 8 with an action substantially analogous to that of the sides of a wedge, exerting forces (orthogonal to the tracks 44, 45) on the actuation portions 5", 8" that are greater than the force (parallel to the sliding directions Z', Z") exerted by the actuation means 24, 25 on the sliders 22, 23 during the opening and closing of the arms 5, 8, in accordance with the functioning principle of the wedge, known to the man skilled in the art.

Preferably, in accordance with the embodiment illustrated in the enclosed figures, the tracks 44, 45 of each slider 22, 23 are obtained by means of cavities obtained on the lateral wall 38", 39" of the hollow portion 38, 39 of the corresponding slider 22, 23, and preferably being extended from an edge 38"', 39"' of such lateral wall 38", 39" turned towards the arms 5, 8 of the gripper 1.

Operatively, when the cam followers 42, 43, following the thrust action of the fixed cam of the machine 100, bring the corresponding slider 22, 23 into the second operative position for opening the corresponding arms 5, 8 of the gripper 1, the sliding blocks 46, 47 of the actuation portions 5", 8" of the arms 5, 8 slide inside the corresponding guide tracks 44, 45 of the corresponding slider 22, 23, being moved from the first guide section 48 of the guide track 44, 45 towards the second guide section 49; in such a manner, this causes the opening of the actuation portions 5 ", 8 " of the arms 5, 8, and consequently the moving away of the retention portions 5', 8' of the arms 5, 8 in order to bring the latter into open position.

On the other hand, when the cam followers 42, 43 are disengaged from the fixed cam of the machine 100, the springs 34, 35 return the corresponding slider 22, 23 into the first operative position, causing the sliding of the sliding blocks 46, 47 of the actuation portions 5", 8" of the arms 5, 8 from the second guide section 49 to the first guide section 48 of the corresponding guide tracks 44, 45 in turn causing the moving closer of the actuation portions 5", 8" and hence the moving closer of the retention portions 5', 8' of the arms 5, 8 in order to bring the latter into the closed position.

More in detail, the first and the second arms 5, 8 are subjected to the return action exerted respectively by the first and the second spring 34, 35 respectively through the first and the second slider 22, 23, and they are closed until they abut against the outer surface of the neck 2" of the bottle 2 to be retained with the retention portions 5', 8' thereof.

In particular, the arrangement of the first and the second spring 34, 35 in engagement respectively on the first and on the second slider 22, 23 allows such springs 34, 35 to actuate the closure respectively of the first and second arms 5, 8 without the active intervention of any other actuation element, due to the simple disengagement of the cam followers 42, 43 of sliders 22, 23 from the fixed cam of the machine 100.

According to an important characteristic of the present gripper 1, the first and the second closed position respectively of the first and the second arms 5, 8 are independent of each other, since the movement of the arms 5, 8 of each pair 4, 7 is actuated by separate movement means 24, 25 advantageously by means of the return actions respectively of the separate first and second spring 34, 35.

In this manner, the angular opening of each pair 4, 7 of arms 5, 8 in closed position is determined by the stopping of the closing rotation of the arms 5, 8 abutted against the external surface of the neck 2" of the bottle 2, and therefore depends on the width of the neck 2"of the bottle 2 at the section of the neck 2" where the latter is retained by the arms 5, 8.

The angular opening of the first pair 4 of first arms 5 in the first closed position will therefore be different from the angular opening of the second pair 7 of second arms 8 in the second closed position, if the neck 2" of the bottle 2 has different widths at the sections where it is retained by the two pairs 4, 7 of arms of the gripper 1. The invention thus conceived therefore attains the pre-established objects.

In particular, the configuration of two pairs 4, 7 of arms 5, 8 susceptible to act on the neck 2" of the bottle 2 in two spaced sections of the neck 2" itself, with independent closed positions, allows firmly retaining bottles of large size and of different type, especially without requiring adaptations or substitutions of components of the gripper 1.

In addition, such configuration of the gripper 1 allows retaining the bottle 2 centered with respect to the median plane β of the gripper 1 itself, and in particular allows retaining the bottle 2 in overturned position with the mouth 2"' aligned with the supply opening of the nozzle 106 of the machine 100.

In addition, the arrangement of the support body 3 of the gripper 1 as pivoting element for the arms 5, 8 and as sliding support for the sliders 22, 23, and in particular also as abutment for the springs 34 and 35, allows attaining a compact gripper that is simultaneously structurally simple and inexpensive to manufacture.

## Claims

1. A gripper (1) for retaining bottles, in particular for a rotary turntable machine, which comprises:
- a support body (3) intended to be mounted on the rotary turntable (102) of an machine (100);
- a first pair (4) of first arms (5), which are pivoted on said support body (3) by means of respective first pins (6), and are provided with respective first retention portions (5') intended to grip the neck (2") of a bottle (2), and with respective first actuation portions (5 ") arranged on the side opposite respective said first retention portions (5') with respect to said respective first pins (6);
- at least one second pair (7) of second arms (8), which are pivoted on said support body (3) by means of respective second pins (9), are provided with respective second retention portions (8'), intended to grip the neck (2") of said bottle (2), and with second actuation portions (8 ") arranged on the side opposite respective said second retention portions (8') with respect to said respective second pins (9);
said first pair (4) of first arms (5) and said second pair (7) of second arms (8) rotating on said support body (3) on parallel rotation planes (α', α") and being spaced from each other along a direction orthogonal to said rotation planes (α', α");
- first transmission means (50) engaged with said first arms (5) and adapted to move the latter between a first open position, in which the first retention portions (5') of said first arms (5) are spaced from each other to receive or release said bottle (2), and a first closed position, in which the first retention portions (5') of said first arms (5) are brought close together, retaining the neck (2") of said bottle (2) gripped;
- second transmission means (51) engaged with said second arms (8) and adapted to move the latter between a second open position, in which the second retention portions (8') of said second arms (8) are spaced from each other to receive or release said bottle (2), and a second closed position, in which the second retention portions (8') of said second arms (8) are brought close together, retaining the neck (2") of said bottle (2) gripped;
- actuation means (24, 25) acting on said first and on said second transmission means (50, 51) for actuating them to respectively move said first arms (5) between said first closed position and said first open position, and said second arms (8) between said second closed position and said second open position;
said gripper (1) being **characterized in that**:
- said first transmission means (50) comprise at least one first slider (22) slidably mounted on said support body (3) and engaged with the first actuation portions (5") of said first arms (5);
- said second transmission means (51) comprise at least one second slider (23) slidably mounted on said support body (3) and engaged with the second actuation portions (8") of said second arms (8);
- each said first and second slider (22, 23) is respectively provided with at least two first guide tracks (44) and with at least two second guide tracks (45) with which the first and the second actuation portions (5", 8") of said first and of said second arms (5, 8) are respectively slidably engaged.

2. Gripper (1) according to claim 1, **characterized in that** said two first guide tracks (44) and said two second guide tracks (45) are extended moving away from each other from a first guide section (48) thereof to a second guide section (49) thereof.

3. Gripper (1) according to claim 1 or 2, **characterized in that** said actuation means (24, 25) comprise:
- first actuation means (24) provided with at least one first spring (34) acting on said first slider (22) and adapted to actuate the latter to move said first arms (5) into said first closed position;
- and second actuation means (25) provided with at least one second spring (35) acting on said second slider (23) and adapted to actuate the latter to move said second arms (8) into said second closed position.

4. Gripper (1) according to claim 3, **characterized in that** it is provided with a median plane (β), which is vertically arranged and is orthogonal to the rotation planes (α', α") of said arms (5, 8);
said first and second spring (34, 35) being extended along respective extension directions parallel to said median plane (β) and to said rotation planes (α', α").

5. Gripper (1) according to claim 3 or 4, **characterized in that** said support body (3) is provided with a first and a second seat (36, 37) respectively provided with a first and a second bottom wall (36', 37'), and in such first and second seat (36, 37) said first and said second spring (34, 35) are respectively partially housed, such springs acting with a respective first end portion (34', 35') thereof in abutment respectively against said first and said second bottom wall (36', 37').

6. Gripper (1) according to any one of the preceding claims from 3 to 5, **characterized in that** said first slider (22) and said second slider (23) are movable between a respective first operative position, in which they respectively bring said first arms (5) into said first closed position and said second arms (8) into said second closed position, and a respective second operative position, in which they respectively bring said first arms (5) into said first open position and said second arms (8) into said second open position;
said first spring (34) being compressed between said support body (3) and said first slider (22) in order to return said first slider (22) towards the respective first operative position, and said second spring (35) being compressed between said support body (3) and said second slider (23) in order to return said second slider (23) towards the respective first operative position.

7. Gripper (1) according to any one of the preceding claims from 3 to 6, **characterized in that** said first and second actuation means (24, 25) respectively comprise a first and a second cam follower (42, 43), respectively mounted on the first and on the second slider (22, 23), and susceptible to being slidably engaged with a fixed cam of said machine (100) in order to respectively move said first and said second slider (22, 23) into said second operative position, overcoming the force exerted respectively by said first and by said second spring (34, 35).

8. Gripper (1) according to any one of the preceding claims, **characterized in that** each said first and second slider (22, 23) is slidably constrained to said support body (3) by means of at least one corresponding first and second guide rod (26, 27), which are fixed to said support body (3), are inserted in a corresponding first and second guide hole (28, 29) respectively of said first and second slider (22, 23), and are respectively provided with a first and a second end stop portion (30, 31) susceptible to respectively receive said first and said second slider (22, 23) in abutment in the respective first operative position.

9. Gripper (1) according to any one of the preceding claims, **characterized in that** said support body (3) is interposed between said first pair (4) of first arms (5) and said second pair (7) of second arms (8) along said direction orthogonal to said rotation planes (α', α").

10. Gripper (1) according to any one of the preceding claims, **characterized in that** it comprises an tilting fork (104) intended to be rotatably connected to the rotary turntable (102) of said machine (100);
the first pins (6) of said first arms (5) being fixed, at a first terminal part (15) thereof to said support body (3), and at a second terminal part (16) thereof to said tilting fork (104) in order to rigidly fix said support body (3) to said tilting fork (104).

## Patentansprüche

1. Greifer (1) zum Halten von Flaschen, insbesondere für eine Arbeitsmaschine mit Drehkarussell, die Folgendes umfasst:
- einen für die Montage auf dem Drehkarussell (102) einer Arbeitsmaschine (100) bestimmten Stützkörper (3);
- ein erstes Paar (4) erster Arme (5), die auf dem genannten Stützkörper (3) mit entsprechenden ersten Zapfen (6) gelagert und mit entsprechenden ersten Halteabschnitten (5') ausgestattet sind, die dazu vorgesehen sind, im Eingriff auf dem Hals (2") einer Flasche (2) zu wirken, und mit entsprechenden ersten Betätigungsabschnitten (5"), die an der gegenüber liegenden Seite der entsprechenden ersten Halteabschnitte (5') im Verhältnis zu den genannten entsprechenden ersten Zapfen (6) angeordnet sind;
- mindestens ein zweites Paar (7) zweiter Arme (8), die auf dem genannten Stützkörper (3) mit entsprechenden zweiten Zapfen (9) gelagert und mit entsprechenden zweiten Halteabschnitten (8') ausgestattet sind, die dazu vorgesehen sind, im Eingriff auf dem Hals (2") der genannten Flasche (2) zu wirken und mit entsprechenden zweiten Betätigungsabschnitten (8"), die an der gegenüber liegenden Seite der entsprechenden genannten zweiten Halteabschnitte (8') im Verhältnis zu den genannten entsprechenden zweiten Zapfen (9) angeordnet sind;
wobei das genannte erste Paar (4) erster Arme (5) und das genannte zweite Paar (7) zweiter Arme (8) auf dem genannten Stützkörper (3) auf parallelen Drehebenen (α', α") drehen und sich zueinander entlang einer rechtwinkligen Richtung zu den genannten Drehebenen im Abstand befinden.
- erste Übertragungsmittel (50), die mit den genannten ersten Armen (5) verbunden und geeignet sind, Letztere zwischen einer ersten geöffneten Position, in der die ersten Halteabschnitte (5') der genannten ersten Arme (5) sich zueinander im Abstand befinden, um die genannte Flasche (2) aufzunehmen oder loszulassen, und einer ersten geschlossenen Position, im der die beiden ersten Halteabschnitte (5') der genannten ersten Arme (5) aneinander angenähert sind und den Hals (2") der genannten Flasche (2) halten, zu verschieben;
- zweite Übertragungsmittel (51), die mit den genannten zweiten Armen (8) verbunden und geeignet sind, Letztere zwischen einer zweiten geöffneten Position, in der die zweiten Halteabschnitte (8') der genannten zweiten Arme (8) sich zueinander im Abstand befinden, um die genannte Flasche (2) aufzunehmen oder loszulassen, und einer zweiten geschlossenen Position, in der die zweiten Halteabschnitte (8') der genannten zweiten Arme (8) aneinander angenähert sind und den Hals (2") der genannten Flasche (2) halten, zu verschieben;
- auf die oben genannten ersten und oben genannten zweiten Übertragungsmittel (24, 25) wirkende Betätigungsmittel (50, 51), um diese zu betätigen und so jeweils die genannten ersten Arme (5) zwischen der genannten ersten geschlossenen Position und der genannten ersten geöffneten Position und die genannten zweiten Arme (8) zwischen der genannten zweiten geschlossenen Position und der genannten zweiten geöffneten Position zu verschieben;
wobei der genannte Greifer (1) **dadurch gekennzeichnet ist, dass**:
- die genannten erste Übertragungsmittel (50) mindestens einen ersten gleitend auf dem genannten Stützkörper (3) montierten und mit den ersten Betätigungsabschnitten (5") der genannten ersten Arme (5) verbundenen ersten Schieber (22) umfassen;
- die genannten zweiten Übertragungsmittel (51) wenigstens einen zweiten gleitend auf dem genannten Stützkörper (3) montierten und mit den zweiten Betätigungsabschnitten (8") der genannten zweiten Arme (8) verbundenen zweiten Schieber (23) umfassen;
- jeder genannte erste und zweite Schieber (22, 23) jeweils mit wenigstens zwei ersten Führungsbahnen (44) und wenigstens zwei zweiten Führungsbahnen (45) ausgestattet ist, mit denen jeweils die ersten und die zweiten Betätigungsabschnitte (5", 8") der jeweils genannten ersten und genannten zweiten Arme (5, 8) gleitend verbunden sind.

2. Greifer (1) nach Anspruch 1, **dadurch gekennzeichnet, dass** die genannten ersten Führungsbahnen (44) und die genannten zweiten Führungsbahnen (45) sich voneinander entfernend zwischen einem ersten Führungsabschnitt (48) und einem zweiten Führungsabschnitt (49) verlaufen.

3. Greifer (1) nach Anspruch 1 oder 2, **dadurch gekennzeichnet, dass** die genannten ersten Betätigungsmittel (25) Folgendes umfassen:
- erste Betätigungsmittel (24), die mit mindestens einer ersten Feder (34) ausgestattet sind, die auf den genannten ersten Schieber (22) wirkt und geeignet ist, Letzteren zu betätigen, um die genannten ersten Arme (5) in die genannte erste geschlossene Position zu verschieben;
- und zweite Betätigungsmittel (25), die mit mindestens einer zweiten Feder (35) ausgestattet sind, die auf den genannten zweiten Schieber (23) wirkt und geeignet ist, Letzteren zu betätigen, um die genannten zweiten Arme (8) in die genannte zweite geschlossene Position zu verschieben;

4. Greifer (1) nach Anspruch 3, **dadurch gekennzeichnet, dass** er mit einer Medianebene (β) ausgestattet ist, die vertikal angeordnet und zu den Drehebenen (α', α") der genannten Arme (5, 8) rechtwinklig ist;
wobei die genannte erste und zweite Feder (34, 35) entlang entsprechenden, zu dieser genannten Medianebene (β) und den genannten Drehebenen (α', α") parallelen Verlängerungsrichtungen verlaufen.

5. Greifer (1) nach Anspruch 3 oder 4, **dadurch gekennzeichnet, dass** der genannte Stützkörper (3) mit einem ersten und einem zweiten Sitz (36, 37) ausgestattet ist, die jeweils mit einer ersten und einer zweiten Bodenwand (36', 37') ausgestattet sind, wobei in den ersten und zweiten Sitz (36, 37) teilweise jeweils die genannte erste und die genannte zweite Feder (34, 35) untergebracht sind, die mit einem jeweils ersten Endabschnitt (34', 35') jeweils gegen die genannte erste und die genannte zweite Bodenwand (36', 37') anschlagen.

6. Greifer (1) nach einem beliebigen der vorangegangenen Ansprüche 3 bis 5, **dadurch gekennzeichnet, dass** der genannte erste Schieber (22) und der genannte zweite Schieber (23) zwischen einer entsprechenden ersten Arbeitsposition, in der sie jeweils die genannten ersten Arme (5) in die genannte erste geschlossene Position und die genannten zweite Arme (8) in die genannte zweite geschlossene Position bringen, und einer entsprechenden zweiten Arbeitsposition, in der sie jeweils die genannten ersten Arme (5) in die genannte erste geöffnete Position und die genannten zweiten Arme (8) in die genannte zweite geöffnete Position bringen, bewegt werden können; wobei die genannte erste Feder (34) zwischen dem genannten Stützkörper (3) und dem genannten ersten Schieber (22) zusammengedrückt ist, um den genannten ersten Schieber (22) in die Richtung der entsprechenden ersten Arbeitsposition zurückzubringen und die genannte zweite Feder (35) zwischen dem genannten Stützkörper (3) und dem genannten zweiten Schieber (23) zusammengedrückt ist, um den genannten zweiten Schieber (23) in Richtung der entsprechenden ersten Arbeitsposition zurückzubringen.

7. Greifer (1) nach einem beliebigen der vorangegangenen Ansprüche 3 bis 6, **dadurch gekennzeichnet, dass** die genannten ersten und zweiten Betätigungsmittel (24, 25) jeweils einen ersten und einen zweiten Nockenstößel (42, 43) umfassen, die jeweils auf dem ersten und dem zweiten Schieber (22, 23) montiert und geeignet sind, gleitend mit einem festen Nocken der genannten Arbeitsmaschine (100) verbunden zu werden, um jeweils den genannten ersten und den genannten zweiten Schieber (22, 23) in die genannte zweite Arbeitsposition zu verschieben und dabei die jeweils von der genannten ersten und der genannten zweiten Feder (34, 35) ausgeübte Kraft zu überwinden.

8. Greifer (1) nach einem beliebigen der vorangegangenen Ansprüche, **dadurch gekennzeichnet, dass** jeder genannte erste und zweite Schieber (22, 23) gleitend mit dem genannten Stützkörper (3) mit wenigstens einer entsprechenden ersten und zweiten Führungsstange (26, 27) verbunden ist, die an diesem Stützkörper (3) befestigt und in eine entsprechenden erste und zweite Führungsöffnung (28, 29) jeweils des genannten ersten und zweiten Schiebers (22, 23) eingesetzt und jeweils mit einem ersten und einem zweiten Endanschlagsabschnitt (30, 31) ausgestattet sind, die geeignet sind, jeweils dem genannten ersten und dem genannten zweiten Schieber (22, 23) in der entsprechenden ersten Arbeitsposition als Anschlag zu dienen.

9. Greifer (1) nach einem beliebigen der vorangegangenen Ansprüche, **dadurch gekennzeichnet, dass** der genannte Stützkörper (3) zwischen dem genannten ersten Paar (4) erster Arme (5) und dem genannten zweiten Paar (7) zweiter Arme (8) entlang der genannten rechtwinkligen Richtung zu den genannten Drehebenen (α', α") eingesetzt ist.

10. Greifer (1) nach einem beliebigen der vorangegangenen Ansprüche, **dadurch gekennzeichnet, dass** er eine Kippgabel (104) umfasst, die dazu bestimmt ist, drehbar mit dem Drehkarussell (102) der genannten Arbeitsmaschine (100) verbunden zu werden;
wobei die ersten Zapfen (6) der genannten ersten Arme (5) mit einem ersten Endteil (15) an dem genannten Stützkörper (3) und mit einem zweiten Endteil (16) an der genannten Kippgabel (104) befestigt sind, um den genannten Stützkörper (3) steif mit der genannten Kippgabel (104) zu befestigen.

## Revendications

1. Pince (1) pour tenir des bouteilles, en particulier pour machine à carrousel rotatif, laquelle comprend :
- un corps de support (3) destiné à être monté sur le carrousel rotatif (102) d'une machine (100) ;
- une première paire (4) de premier bras (5), lesquels sont articulés sur ledit corps de support (3) au moyen des respectifs premiers goujons (6) et sont munis de respectives premières parties de retenue (5') destinées à agir en prise sur le col (2") d'une bouteille (2), et de respectives premières parties d'actionnement (5 ") placées du côté opposé aux respectives dites premières parties de retenue (5') par rapport auxdits respectifs premiers goujons (6) ;
- au moins une deuxième paire (7) de deuxièmes bras (8), lesquels sont articulés sur ledit corps de support (3) au moyen des respectifs deuxièmes goujons (9), sont munis de respectives deuxièmes parties de retenue (8'), destinées à agir en prise sur le col (2") de ladite bouteille (2), et de deuxièmes parties d'actionnement (8") placées du côté opposé aux respectives dites deuxièmes parties de retenue (8') par rapport auxdits respectifs deuxièmes goujons (9) ; ladite première paire (4) desdits premiers bras (5) et ladite deuxième paire (7) desdits deuxièmes bras (8) tournant sur ledit corps de support (3) sur des plans de rotation (α', α") parallèles et étant écartées l'une de l'autre le long d'une direction orthogonale auxdits plans de rotation (α', α") ;
- premiers moyens de transmission (50) engagés dans lesdits premiers bras (5) et aptes à déplacer ces derniers entre une première position ouverte, dans laquelle les premières parties de retenue (5') desdits premiers bras (5) sont écartées l'une de l'autre pour recevoir ou relâcher ladite bouteille (2), et une première position fermée, dans laquelle les premières parties de retenue (5') desdits premiers bras (5) sont rapprochées l'une de l'autre en retenant en prise le col (2") de ladite bouteille (2) ;
- deuxièmes moyens de transmission (51) engagés dans lesdits deuxièmes bras (8) et aptes à déplacer ces derniers entre une deuxième position ouverte, dans laquelle les deuxièmes parties de retenue (8') desdits deuxièmes bras (8) sont écartées l'une de l'autre pour recevoir ou relâcher ladite bouteille (2), et une deuxième position fermée, dans laquelle les deuxièmes parties de retenue (8') desdits deuxièmes bras (8) sont rapprochées l'une de l'autre en retenant en prise le col (2") de ladite bouteille (2) ;
- moyens d'actionnement (24,25) agissant sur lesdits premiers et lesdits deuxièmes moyens de transmission (50, 51) pour les actionner et déplacer lesdits premiers bras (5) entre ladite première position fermée et ladite première position ouverte et lesdits deuxièmes bras (8) entre ladite deuxième position fermée et ladite deuxième position ouverte ;
ladite pince (1) étant **caractérisée en ce que** :
- lesdits premiers moyens de transmission (50) comprennent au moins une première coulisse (22) montée de façon coulissante sur ledit corps de support (3) et engagée dans les premières parties d'actionnement (5 ") desdits premiers bras (5) ;
- lesdits deuxièmes moyens de transmission (51) comprennent au moins une deuxième coulisse (23) montée de façon coulissante sur ledit corps de support (3) et articulée dans les deuxièmes parties d'actionnement (8") desdits deuxièmes bras (8) ;
- chacune desdites première et deuxième coulisse (22,23) est dotée respectivement d'au moins deux premières pistes de guidage (44) et d'au moins deux deuxièmes pistes de guidage (435) dans lesquelles sont engagées de façon coulissante respectivement les premières et les deuxièmes parties d'actionnement (5", 8") respectivement desdits premiers et desdits deuxièmes bras (5, 8).

2. Pince (1) selon la revendication 1, **caractérisée en ce que** lesdites deux premières pistes de guidage (44) et lesdites deux deuxièmes pistes de guidage (45) se développent en s'éloignant l'une de l'autre d'un leur premier tronçon de guidage (48) à un leur deuxième tronçon de guidage (49).

3. Pince (1) selon la revendication 1 ou 2, **caractérisée en ce que** lesdits moyens d'actionnement (24, 25) comprennent :
- des premiers moyens d'actionnement (24) dotés d'au moins un premier ressort (34) agissant sur ladite première coulisse (22) et apte à actionner cette dernière pour déplacer lesdits premiers bras (5) sur ladite première position fermée ;
- et des deuxièmes moyens d'actionnement (25) dotés d'au moins un deuxième ressort (35) agissant sur ladite deuxième coulisse (23) et apte à actionner cette dernière pour déplacer lesdits deuxièmes bras (8) sur ladite deuxième position fermée.

4. Pince (1) selon la revendication 3, **caractérisée en ce qu'**elle est dotée d'un plan médian (β), lequel est placé verticalement et est orthogonal aux plans de rotation (α', α") desdits bras (5, 8) ;
lesdits premier et deuxième ressort (34, 35) se développant le long des respectives directions d'allongement parallèles audit plan médian (β) et auxdits plans de rotation (α' α").

5. Pince (1) selon la revendication 3 ou 4, **caractérisée en ce que** ledit corps de support (3) est pourvu d'un premier et d'un deuxième siège (36, 37) dotés respectivement d'une première et d'une deuxième paroi de fond (36', 37'), dans lesquels premier et deuxième siège (36,37) sont partiellement logés respectivement ledit premier et ledit deuxième ressort (34, 35) agissant avec une leur première partie d'extrémité (34', 35') en butée respectivement sur ladite première et sur ladite deuxième paroi de fond (36', 37').

6. Pince (1) selon une quelconque des revendications précédentes de la 3 à la 5, **caractérisée en ce que** ladite première coulisse (22) et ladite deuxième coulisse (23) sont mobiles entre une respective première position opérationnelle, dans laquelle elles amènent respectivement lesdits premiers bras (5) sur ladite première position fermée et lesdits deuxièmes bras (8) sur ladite deuxième position fermée et une respective deuxième position opérationnelle, dans laquelle elles amènent respectivement lesdits premiers bras 85) sur ladite première position ouverte et lesdits deuxièmes bras (8) sur ladite deuxième position ouverte ;
ledit premier ressort (34) étant comprimé entre ledit corps de support (3) et ladite première coulisse (22) pour rappeler ladite première coulisse (22) vers la respective première position opérationnelle et ledit deuxième ressort (35) étant comprimé entre ledit corps de support (3) et ladite deuxième coulisse (23) pour rappeler ladite deuxième coulisse (23) vers la respective première position opérationnelle.

7. Pince (1) selon une quelconque des revendications précédentes de la 3 à la 6, **caractérisée en ce que** lesdits premiers et deuxièmes moyens d'actionnement (24, 25) comprennent respectivement un premier et un deuxième suiveur de came (42, 43) montés respectivement sur la première et sur la deuxième coulisse (22, 23), et susceptibles d'être engagés de façon coulissante dans une came fixe de ladite machine (100) pour déplacer respectivement ladite première et ladite deuxième coulisse (22, 23) sur ladite deuxième position opérationnelle, vainquant la force exercée respectivement par ledit premier et ledit deuxième ressort (34, 35).

8. Pince (1) selon une quelconque des revendications précédentes, **caractérisée en ce que** chacune desdites première et deuxième coulisses (22, 23) est fixée de façon coulissante audit corps de support (3) par au moins une correspondante première et deuxième tige de guidage (26, 27), lesquelles sont fixées audit corps de support (3), sont insérées dans un correspondant premier et deuxième trou de guidage (28, 29) respectivement desdites première et deuxième coulisse (22, 23) et sont dotées respectivement d'une première et d'une deuxième partie de fin de course (30, 31) susceptible de recevoir en butée respectivement ladite première et ladite deuxième coulisse (22, 23) dans la respective première position opérationnelle.

9. Pince (1) selon une quelconque des revendications précédentes **caractérisée en ce que** ledit corps de support (3) est interposé entre ledit premier paire (4) de premiers bras (5) et ledit deuxième paire (7) de deuxièmes bras (8) le long de ladite direction orthogonale auxdits plans de rotation (α', α").

10. Pince (1) selon une quelconque des revendications précédentes, **caractérisée en ce qu'**elle comprend une fourche de retournement (104) destinée à être reliée de façon tournante au carrousel rotatif (102) de ladite machine (100) ;
les premiers goujons (6) desdits premiers bras (5) étant fixés à une leur première partie terminale (15), audit corps de support (3) et à une leur deuxième partie terminale (16), à ladite fourche de retournement (104) pour fixer rigidement ledit corps de support (3) à ladite fourche de retournement (104).
